# NEUE EUROPÄISCHE PATENTSCHRIFT

(11) **EP 2 140 931 B2**
(45) Veröffentlichungstag und Bekanntmachung des Hinweises auf die Entscheidung über den Einspruch: **07.09.2016**
(45) Hinweis auf die Patenterteilung: 24.08.2011
(21) Anmeldenummer: 09005902.3
(22) Anmeldetag: 29.04.2009
(51) Int. Cl.: B01F 7/00, B01F 13/00, B28C 5/08, B28C 5/12, B23B 31/107, F16D 1/116

(54) **Rührmaschine mit längsverstellbarer Werkzeugaufnahme**
Agitating machine with length-adjustable tool holder
Machine de mélange dotée d'une réception d'outil réglable en longueur

(30) Priorität: 05.07.2008 DE 102008031839
(43) Veröffentlichungstag der Anmeldung: 06.01.2010
(73) Patentinhaber: Festool GmbH, 73240 Wendlingen am Neckar (DE)
(72) Erfinder: Kirchner, Manfred, Dr., 73272 Neidlingen (DE)
(74) Vertreter: Patentanwälte Bregenzer und Reule Partnerschaftsgesellschaft mbB

(56) Entgegenhaltungen:
- DE-B3- 10 358 223
- DE-U1- 29 619 529
- US-A- 1 703 099
- US-A- 2 209 287
- US-A- 2 709 572
- US-A- 3 820 763
- US-A- 3 828 861

## Beschreibung

Die Erfindung betrifft eine Rührmaschine zum Anrühren von Baumaterial gemäß dem Oberbegriff des Anspruchs 1.

Aus US 2, 209, 287 geht z.B. eine solche Rührmaschine hervor. Die Rührmaschine weist zwei axial zueinander beabstandete Propelleranordnungen auf. Eine Propelleranordnung hat einen festen Abstand zu einem Gehäuse der Rührmaschine, während eine zweite Propelleranordnung an einem Stab angeordnet ist, der in einem Hohlrohr verschieblich aufgenommen ist.

Eine aus US 1,703,099 bekannte Rührmaschine gemäß dem Oberbegriff dem Anspruchs 1 hat eine Propelleranordnung, die am freien Ende eines Rührstabes angeordnet ist, der seinerseits in einer Hohlwelle der Rührmaschine teleskopierbar angeordnet ist.

Das Werkzeug ist bei einer aus DE 44 40 566 C1 bekannten Rührmaschine ein Rührwerkzeug, zum Beispiel ein Rührstab, der in der Werkzeugaufnahme aufgenommen ist, beispielsweise eingeschraubt oder bajonettartig eingesetzt ist. Das freie Ende des Rührwerkzeuges taucht in das in einem Anrührgefäß befindliche Baumaterial, beispielsweise Kleber, Gips oder dergleichen, ein und rührt dieses beispielsweise unter Zufügung von Wasser durch. Das Anrührgefäß steht in der Regel auf dem Boden. Somit bestimmt die Gesamtlänge bestehend aus Rührstab, Werkzeug-Aufnahmeeinrichtung und Gehäuse eine Arbeitshöhe eines Bedieners. Wenn der Bediener klein ist, ist diese Gesamtanordnung der Rührmaschine zu hoch, bei großen Bedienern zu niedrig. Insgesamt ist die Handhabung unkomfortabel.

Es ist daher die Aufgabe der vorliegenden Erfindung, eine Rührmaschine zu schaffen, bei der ein Abstand zwischen einem Gehäuse der Rührmaschine und einem freien Ende eines mit der Rührmaschine betriebenen, an der Werkzeugaufnahme anordenbaren Rührstabes einstellbar ist.

Zur Lösung der Aufgabe ist eine Rührmaschine gemäß der technischen Lehre des Anspruchs 1 vorgesehen.

Mit der Rührmaschine kann Baumaterial gerührt werden.

Der erfindungsgemäße Ansatz ist, dass die Werkzeug-Aufnahmeeinrichtung eine einfache Längenanpassung ermöglicht. Damit kann eine bequeme Anpassung an die jeweilige Körpergröße eines Bedieners erfolgen. Der Abstand zwischen dem distalen, freien Ende des Werkzeugs und dem Gehäuse ist mittels der erfindungsgemäßen Werkzeug-Aufnahmeeinrichtung einstellbar, so dass die Rührmaschine bequem handhabbar ist.

Die Werkzeugaufnahme ist in der Längsrichtung vorzugsweise teleskopierbar.

Die Werkzeugaufnahme ist relativ zu der Abtriebshalterung mit Hilfe einer Schiebestange verschieblich, die in einer Schiebeaufnahme aufgenommen ist.

Die Schiebestange ist in der Schiebeaufnahme formschlüssig aufgenommen. Durch den Formschluss wird die Drehmitnahme realisiert.

Die Schiebeaufnahme hat eine zumindest teilweise polygonale Innenkontur und die Schiebestange eine zu dieser Innenkontur formschlüssig passende Außenkontur. Wenn die Schiebestange in die Schiebeaufnahme eingesetzt ist, ist der Formschluss und somit die Drehmitnahme realisiert.

Beispielsweise ist die Innenkontur hexagonal und dazu passend auch die Außenkontur.

Die Schiebestange kann zur Längsfestlegung reibschlüssig in der Schiebeaufnahme aufgenommen sein.

Zweckmäßigerweise ist an der Schiebeaufnahme eine Klemmeinrichtung zum Klemmen und/oder zur Längsfestlegung der Schiebestange vorgesehen.

Zur Längsfestlegung der Schiebestange an der Schiebeaufnahme ist ein quer zu der Längsrichtung beweglich an der Schiebeaufnahme gelagertes Verriegelungselement und optional ein Verrastungselement vorgesehen. Eine Verrastung der Schiebestange zur Längsfestlegung, vorzugsweise eine Vorverrastung vor der Verriegelung, ist möglich. Das Verriegelungselement oder Verrastungselement ist beispielsweise in einer quer zur Längsrichtung verlaufenden Bohrung an der Schiebeaufnahme beweglich. Vorzugsweise ist das Verriegelungselement oder Verrastungselement eine Kugel. Das jeweilige Verriegelungselement oder Verrastungselement greift in einer Verriegelungsposition in eine Verriegelungsaufnahme oder Rastaufnahme an der Schiebestange ein und verriegelt beziehungsweise verrastet diese somit in der jeweiligen Längsposition. Zur Realisierung von zwei oder weiteren Längspositionen ist vorgesehen, dass die Schiebestange mehrere Verriegelungsaufnahmen, die in Längsrichtung zueinander beabstandet sind, aufweist. Auch in Längsrichtung zueinander beabstandete Rastaufnahmen sind zweckmäßig.

Die Verriegelungsaufnahmen sind beispielsweise Kugelkalotten, Einschnürungen oder dergleichen, in die das jeweilige Verriegelungselement eingreifen kann.

Es versteht sich, dass im Prinzip ein Verriegelungselement bereits ausreicht. Vorteilhaft sind jedoch mehrere Verriegelungselemente vorgesehen, die in Umfangsrichtung der Schiebeaufnahme Abstände zueinander haben. Die Verriegelungselemente greifen dann von mehreren Seiten in die verriegelungsaufnahmen an der Schiebestange ein.

Zum Verstellen des Verriegelungselements oder der Verriegelungselemente weist die Rührmaschine vorzugsweise eine an der Schiebeaufnahme schiebebeweglich, drehbeweglich oder beides gelagerte Verriegelungshülse auf, mit der das oder die Verriegelungselemente in ihre Verriegelungsstellung verlagert werden kann oder können, bei der es beziehungsweise sie in die jeweilige Verriegelungsaufnahme eingreift beziehungsweise eingreifen.

Die Schiebehülse kann vorteilhaft in die Verriegelungsstellung federbelastet sein, so dass sie die Verriegelungsstellung automatisch einnimmt, wenn sie der Bediener loslässt. Durch Schieben und/oder Drehen der Verriegelungshülse kann der Bediener die Verriegelungsstellung aufheben.

Dann nimmt die Verriegelungshülse eine Entriegelungsstellung ein. Die Verriegelungshülse hat zweckmäßigerweise einen Aufnahmeraum zur Aufnahme des Verriegelungselements in der Entriegelungsstellung, bei der das Verriegelungselement aus der jeweiligen Verriegelungsaufnahme herausbewegt ist und dementsprechend die Schiebestange in der Schiebeaufnahme verschieblich ist. Beispielsweise wird das Verriegelungselement durch Verschieben der Schiebestange in den Aufnahmeraum der Verriegelungshülse verlagert. An den Verriegelungsaufnahmen sind hierzu zweckmäßigerweise Gleitschrägen vorhanden, an denen das jeweilige Verriegelungselement von der Verriegelungsstellung in die Entriegelungsstellung entlanggleiten kann.

Anstelle der vorgenannten Verriegelungshülse könnte auch beispielsweise eine Mutter vorgesehen sein, die auf das die Schiebeaufnahme enthaltende Bauteil aufgeschraubt ist und beim Festziehen die Schiebeaufnahme für die Schiebestange verengt, so dass die Schiebestänge in der Längsrichtung festgelegt ist.

Vorzugsweise ist die Schiebestange aus der Schiebeaufnahme entnehmbar. Somit ist es möglich, die Schiebestange gegen eine alternative, beispielsweise längere oder kürzere Schiebestange zur Längenanpassung der Gesamtkonfiguration anzupassen.

Die Werkzeugaufnahme ist zweckmäßigerweise an einem vorderen, freien Ende der Schiebestange angeordnet.

Die Schiebeaufnahme ist vorteilhaft ein Bestandteil der Abtriebshalterung, während die Schiebestange einen Bestandteil der Werkzeugaufnahme bildet. Es versteht sich, dass auch die umgekehrte Konfiguration möglich wäre. Die Schiebeaufnahme und die Schiebestange sind vorzugsweise mit der Abtriebshalterung und der Werkzeugaufnahme fest verbunden.

Die Werkzeugaufnahme kann beispielsweise eine Bajonett-Steckhalterung sein. Vorzugsweise hat die Werkzeugaufnahme jedoch ein Schraubgewinde für das Werkzeug. Dies ist eine besonders einfache Bauweise.

Nachfolgend wird ein Ausführungsbeispiel der Erfindung anhand der Zeichnung erläutert. Es zeigen:

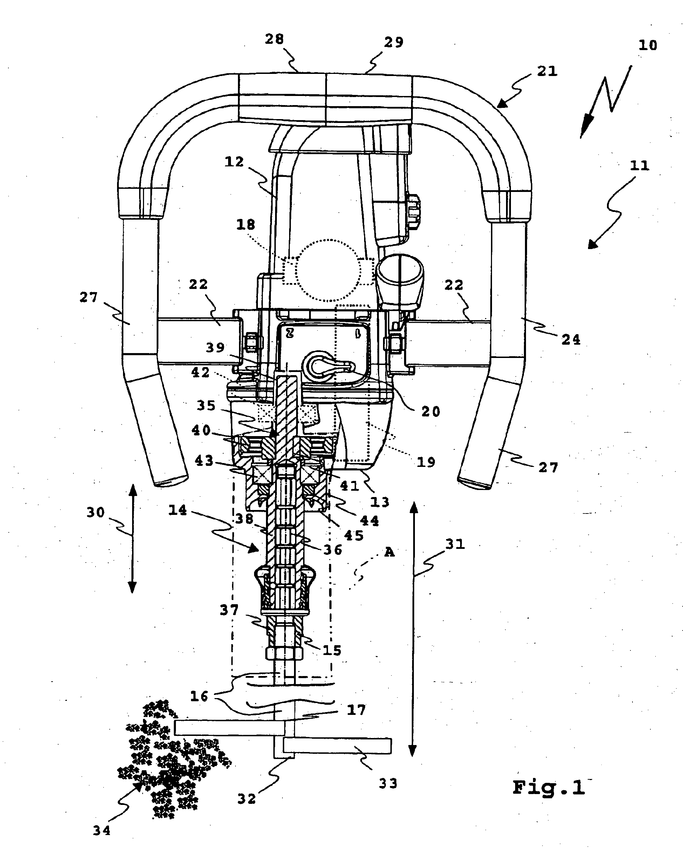

- Figur 1: eine teilweise geschnittene Vorderansicht einer erfindungsgemäßen Rührmaschine,
- Figur 2: eine detailliertere Teilschnittansicht einer Werk- zeug-Aufnahmeeinrichtung der Rührmaschine gemäß Fi- gur 1, etwa entsprechend einem Ausschnitt A in Fi- gur 1, und
- Figur 3: die Rührmaschine gemäß Figur 1 in perspektivischer Schrägansicht.

Eine Hand-Werkzeugmaschine 10 in Gestalt einer Rührmaschine 11 hat ein Gehäuse 12 mit einer bei Gebrauch unteren Unterseite 13, an dereine WerkzeugAufnahmeeinrichtung 14 angeordnet ist. Die WerkzeugAufnahmeeinrichtung 14 weist eine Werkzeugaufnahme 15 zum Halten eines Werkzeugs 16, beispielsweise eines Rührstabs 17, auf.

Ein Antriebsmotor 18 im Innern des Gehäuses 12 treibt beispielsweise über ein Getriebe 19 die Werkzeug-Aufnahmeeinrichtung 14 und letztlich den durch diese gehaltenen Rührstab 17 rotatorisch an. Mit Hilfe eines Getriebeschalters 20 kann das Getriebe 19 geschaltet werden.

Die Hand-Werkzeugmaschine 10 ist an einer Griffanordnung 21 bequem ergreifbar. Ein am Gehäuse 12 befestigter Griffhalter 22 mit vom Gehäuse 12 abstehenden Tragabschnitten und Armen hält beispielsweise einen bogenförmig zur Oberseite des Gehäuses 12 gekrümmt verlaufenden Schalterarm 23 sowie einen zur Unterseite 13 hin offenen, U-förmigen Führungsgriff 24. Der Führungsgriff 24 und der Schalterarm 23 sind an einander entgegengesetzten Seiten des Gehäuses 12 angeordnet. Am freien Ende des Schalterarms 23 befindet sich ein Handgriff 25 mit einem Schalter 26 zum Einund Ausschalten des Antriebsmotors 18. Seitenschenkel 27 des Führungsgriffs 24 sind an dem Griffhalter 22 festgelegt. Ein Querabschnitt 28 des Führungsgriffs 24 erstreckt sich an der Oberseite 29 der Hand-Werkzeugmaschine 10 zwischen den beiden Seitenschenkeln 27. Ein Bediener ergreift die Rührmaschine in der Regel an dem oberen Querabschnitt 28 sowie dem Führungsgriff 24, die im oberen Bereich der Hand-Werkzeugmaschine 10 verlaufen. Für einen kleineren Bediener wäre es zwar prinzipiell möglich, die Hand-Werkzeugmaschine 10 auch an weiter unten liegenden Abschnitten der Griffanordnung 21 zu ergreifen, beispielsweise den Seitenschenkeln 27, am unteren Bereich des Schalterarms 23 oder gar am Griffhalter 22, Dies ist allerdings unbequem. Hier schafft die Erfindung Abhilfe:

Die Werkzeugaufnahme 15 ist nämlich in einer Längsrichtung 30, in der die Werkzeugaufnahme 15 vor das Gehäuse 12 vorsteht, zur Veränderung eines Abstandes 31 zwischen einem freien Ende 32 des Werkzeugs 16 und dem Gehäuse 12 teleskopierbar. An dem freien Ende 32 sind schematisch dargestellte Rührmittel 33, beispielsweise Rührvorsprünge, zum Rühren von Baumaterial 34 vorhanden.

Die erfindungsgemäß längenverstellbare Werkzeug-Aufnahmeeinrichtung 14 ermöglicht es, dass der Abstand 31 veränderbar ist, ohne dass das Werkzeug 16 ausgetauscht werden muss. Das heißt, es kann ein und derselbe Rührstab 17 an der Hand-Werkzeugmaschine 10 verbleiben. Der Bediener der Hand-Werkzeugmaschine 10 verstellt lediglich die Längsposition der Werkzeugaufnahme 15 an der Werkzeug-Aufnahmeeinrichtung 14, um komfortabel arbeiten zu können. Beispielsweise verkürzt ein kleiner Bediener den Abstand 31, während ein größerer Bediener den Abstand 31 vergrößert.

Eine Abtriebshalterung 35 der Werkzeug-Aufnahmeeinrichtung 14 ist mit dem Antriebsmotor 18 über das Getriebe 19 drehverbunden. Die Abtriebshalterung 35 wiederum hält die Werkzeugaufnahme 15, die am vorderen, freien Ende 36 einer Schiebestange 37 angeordnet ist, drehfest. Die Schiebestange 37 ist in einer Schiebeaufnahme 38 der Abtriebshalterung 35 in der Längsrichtung 30 verschieblich aufgenommen. Dadurch ist die Teleskopierbarkeit realisiert.

Das Getriebe 20 treibt ein an einer Welle 39 der Abtriebshalterung 35 drehfest angeordnetes Zahnrad 40 an. Das Zahnrad 40 ist beispielsweise mittels einer Passfeder 41 drehfest mit der Welle 39 verbunden. Das Zahnrad 40 befindet sich zwischen einem oberen und einem unteren Lager 42, 43, die die Welle 39 und somit die Abtriebshalterung 35 drehbar am Gehäuse 12 lagern.

Die vorgenannten Komponenten, nämlich die Lager 42, 43, das Zahnrad 40 und dergleichen andere Antriebsbauteile der Hand-Werkzeugmaschine 10, sind durch ein Schutzgehäuse 44, das unten am Gehäuse 12 angesetzt ist oder einen integralen Bestandteil desselben bildet, geschützt. Ferner sind zweckmäßigerweise Dichtungsmittel, beispielsweise eine Dichtung 45, die von der Welle 39 durchdrungen ist, zum Schutz der beweglichen Komponenten im Innern der Gehäuse 12, 44 vorgesehen.

Ein unterer, vor das Gehäuse 12 und das Schutzgehäuse 44 vorstehender Abschnitt 46 der Welle 39 ist als Hohlwelle 47 ausgestaltet, deren Innenraum die Schiebeaufnahme 38 bildet, in der die Schiebestange 37 entlang der Längsrichtung 30 verschieblich aufgenommen ist.

Die Schiebestange 37 hat eine hexagonale Außenkontur 48, die mit einer entsprechend ebenfalls hexagonalen Innenkontur 49 der Schiebeaufnahme 38 korrespondiert. Somit passen die beiden Konturen 48, 49 formschlüssig ineinander und realisieren so eine Drehmitnahme. Die Schiebestange 37 ist eine Mehrkantstange.

Am freien Ende 36 der Schiebestange 37 ist eine Schraubmutter 50 drehfest angeordnet, beispielsweise aufgeschrumpft, angeklebt oder angeschweißt, die die Werkzeugaufnahme 15 bereitstellt. Die Werkzeugaufnahme 15 umfasst ein Einschraubgewinde, in das ein Montageende 51 des Werkzeugs 16 eingeschraubt ist, bis ein Flansch 52 unterhalb des Montageendes 51 an die Stirnseite der Werkzeugaufnahme 15 beziehungsweise der Schraubmutter 50 anschlägt.

Die Schiebestange 37 ist an der Schiebeaufnahme 38 mittels einer Verriegelungseinrichtung 53 in mehreren Längspositionen festlegbar. Die Verriegelungseinrichtung 53 ist manuell und ohne Werkzeug lösbar sowie wieder verschließbar oder verriegelbar.

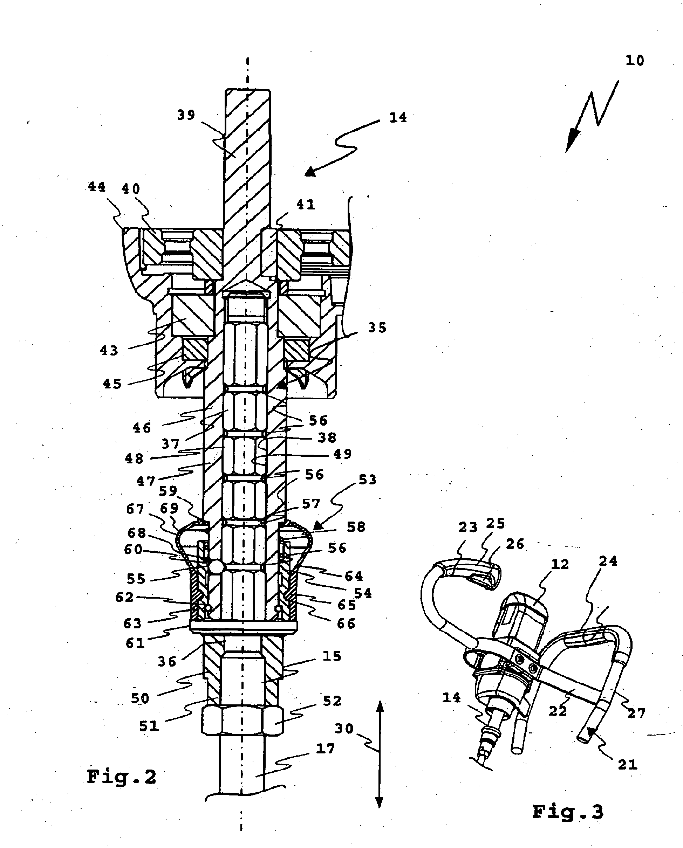

Die Verriegelungseinrichtung 53 umfasst eine in der Längsrichtung 30 beweglich auf der Hohlwelle 47 verschieblich gelagerte Verriegelungshülse. Mit der Verriegelungshülse 54 ist ein Verriegelungselement 55, beim Ausführungsbeispiel eine Kugel - wobei auch andere Formschluss-Verriegelungselemente denkbar wären, z.B. Rollen oder walzen -, zwischen einer Entriegelungsstellung und einer Verriegelungsstellung, die in Figur 2 dargestellt ist, verstellbar. Das Verriegelungselement 55 ist in einem Führungskanal 68 geführt, der sich in einer Umfangswand der Hohlwelle 47 zwischen der Schiebeaufnahme 38 und der Außenseite der Hohlwelle 47 erstreckt.

In der Verriegelungsstellung greift das Verriegelungselement 55 (es können auch mehrere Verriegelungselemente vorgesehen sein) in eine von mehreren, in Längsrichtung 30 zueinander beabstandeten Verriegelungsaufnahmen 56 an der Schiebestange 37 ein. Die Verriegelungsaufnahmen 56 könnten beispielsweise Kugelkalotten sein, sind jedoch beim Ausführungsbeispiel durch am Außenumfang der Schiebestange 37 verlaufende Ringnuten 57 gebildet.

Die Verriegelungshülse 54 ist durch eine Feder 58 in die Verriegelungsstellung (Figur 2) federbelastet. Die Feder 58 stützt sich einerseits an einem Längsanschlag 59 der Abtriebshalterung 35 und andererseits an der Verriegelungshülse 54 ab, beispielsweise an deren Stirnseite oder, wie beim Ausführungsbeispiel, an einem Verriegelungsvorsprung 60. Teilweise ist die Feder58 in einem Innenraum der Verriegelungshülse 54 geschützt angeordnet.

Die Feder 58 belastet die Verriegelungshülse 54 derart, dass der Verriegelungsvorsprung 60 das Verriegelungselement 55 nach radial innen in eine der Verriegelungsaufnahmen 56 drückt. Der Verriegelungsvorsprung 60 steht nach radial innen vor die Innenseite oder Innenwand der Verriegelungshülse 54 vor. Der Verriegelungsvorsprung 60 ist vorzugsweise ringförmig, so dass es auf die Drehposition der Verriegelungshülse 54 bezüglich der Welle 39 nicht ankommt.

Die Feder 58 drückt die Verriegelungshülse 54 gegen einen Anschlagflansch 61, der an der Oberseite der Schraubmutter 50 angeordnet ist und vor diese nach radial außen vorsteht. Zudem schlägt die Verriegelungshülse 54 in der Verriegelungsstellung mit einem Anschlag 62 an ihrem Innenumfang gegen einen Ringanschlag 63 an, der auf der Außenseite am unteren, freien Ende der Hohlwelle 47 angeordnet ist.

Die Verriegelungseinrichtung 53 ist zweckmäßigerweise durch Dichtmittel vor Umwelteinflüssen geschützt. Diese Dichtmittel umfassen beispielsweise eine Schutzhülle 69 in Gestalt einer elastischen Tülle 64, die auf der Außenseite der Verriegelungshülse 54 angeordnet und mit dieser verbunden ist. Beispielsweise greift ein nach radial innen vorstehender Mitnahmevorsprung 65 der Tülle 64 in eine Mitnahmeausnehmung 66 am Außenumfang der Verriegelungshülse 54 ein. Die Tülle 64 erstreckt sich ferner bis zum Ringanschlag 63 und erstreckt sich am anderen Ende bis zu dem Längsanschlag 59, an dem sie unter Bildung eines Balges 67 anschlägt. Der Balg 67 ermöglicht den Verstellweg der Verriegelungshülse54 zwischen ihrer Entriegelungsstellung und ihrer Verriegelungsstellung.

gestrichen

## Patentansprüche

1. Rührmaschine als Hand-Werkzeugmaschine zum Anrühren von Baumaterial (34), mit einer durch einen Antriebsmotor (18) antreibbaren, in einer Längsrichtung (30) vor ein Gehäuse (12) der Rührmaschine (11) vorstehenden Werkzeug-Aufnahmeeinrichtung (14) mit einer Werkzeugaufnahme (15), wobei die Hand-Werkzeugmaschine (10) an einer Griffanordnung (21) bequem ergreifbar ist, wobei die Werkzeug-Aufnahmeeinrichtung (14) eine mit dem Antriebsmotor (18) drehverbundene Abtriebshalterung (35) zum drehfesten Halten der Werkzeugaufnahme (15) in mindestens zwei Längspositionen bezüglich der Längsrichtung (30) zur Veränderung eines Abstandes (31) zwischen einem freien Ende (32) des Werkzeugs (16) und dem Gehäuse (12) aufweist, wobei die Werkzeugaufnahme (15) relativ zu der Abtriebshalterung (35) mittels einer Schiebeaufnahme (38) und einer in der Schiebeaufnahme (38) entlang der Längsrichtung (30) längsverschieblichen Schiebestange (37) verschieblich ist, **dadurch gekennzeichnet, dass** sie einen Rührstab (17) mit Rührmitteln (33), beispielsweise Rührvorsprüngen, zum Rühren des Baumaterials (34) an seinem freien Ende aufweist, dass die Werkzeugaufnahme (15) zum Aufnehmen und Halten des Rührstabes (17) ausgestaltet ist, dass die Schiebestange (37) in der Schiebeaufnahme (38) formschlüssig aufgenommen ist und dass die Schiebeaufnahme (38) eine zumindest teilweise polygonale Innenkontur (49) und die Schiebestange (37) eine zu der Innenkontur (49) formschlüssig passende Außenkontur (48) aufweisen, wobei sie eine Verriegelungseinrichtung (53) zum Festlegen der Schiebestange (37) an der Schiebeaufnahme (38) in mindestens zwei Längspositionen aufweist, die ein an der Schiebeaufnahme (38) quer zu der Längsrichtung (30) beweglich gelagertes Verriegelungselement (55) aufweist, wobei die Schiebestange (37) an mindestens zwei Längspositionen an der zu der Innenkontur (49) formschlüssig passenden Außenkontur (48) Verriegelungsaufnahmen (56) für das Verriegelungselement (55) zur Verriegelung der Schiebestange (37) an der Schiebeaufnahme (38) aufweist.

2. Rührmaschine nach Anspruch 1, **dadurch gekennzeichnet, dass** die Werkzeugaufnahme (15) in der Längsrichtung (30) teleskopierbar ist.

3. Rührmaschine nach Anspruch 1 oder 2, **dadurch gekennzeichnet, dass** die Schiebestange (37) in der Schiebeaufnahme (38) reibschlüssig aufgenommen ist.

4. Rührmaschine nach einem der vorhergehenden Ansprüche, **dadurch gekennzeichnet, dass** die Innenkontur (49) und die Außenkontur (48) hexagonal sind.

5. Rührmaschine nach einem der vorhergehenden Ansprüche, **dadurch gekennzeichnet, dass** die Schiebestange (37) eine Mehrkantstange ist.

6. Rührmaschine nach einem der vorhergehenden Ansprüche, **dadurch gekennzeichnet, dass** sie eine Verrastungseinrichtung und/oder eine Klemmeinrichtung zum Festlegen der Schiebestange (37) an der Schiebeaufnahme (38) in mindestens zwei Längspositionen aufweist.

7. Rührmaschine nach Anspruch 1 oder 6, **dadurch gekennzeichnet, dass** die Verriegelungseinrichtung (53) und/oder die Verrastungseinrichtung in eine die Schiebestange (37) verriegelnde Verrieglungsstellung beziehungsweise eine die Schiebestange (37) verrastende Raststellung federbelastet ist.

8. Rührmaschine nach Anspruch 6 oder 7, **dadurch gekennzeichnet, dass** die Verrastungseinrichtung ein an der Schiebeaufnahme (38) quer zu der Längsrichtung (30) beweglich gelagertes Verrastungselement aufweist, und dass die Schiebestange (37) an mindestens zwei Längspositionen Rastaufnahmen für das Verrastungselement zur Verrastung der Schiebestange (37) an der Schiebeaufnahme (38) aufweist.

9. Rührmaschine nach einem der vorhergehenden Ansprüche, **dadurch gekennzeichnet, dass** die Verriegelungseinrichtung (53) eine an der Schiebeaufnahme (38) zum Verstellen des Verrieglungselements in eine in die jeweilige Verriegelungsaufnahme (56) eingreifende Verriegelungsstellung schiebebeweglich und/oder drehbeweglich gelagerte Verriegelungshülse (54) aufweist.

10. Rührmaschine nach Anspruch 9, **dadurch gekennzeichnet, dass** die insbesondere in einer Schutzhülle (69) angeordnete Verriegelungshülse (54) einen Aufnahmeraum zur Aufnahme des Verrieglungselements in einer Entriegelungsstellung aufweist, in der das Verrieglungselement aus der jeweiligen Verriegelungsaufnahme (56) herausbewegt ist und die Schiebestange (37) in der Schiebeaufnahme (38) verschieblich ist.

11. Rührmaschine nach einem der vorhergehenden Ansprüche, **dadurch gekennzeichnet, dass** die Schiebestange (37) aus der Schiebeaufnahme (38) entnehmbar ist.

12. Rührmaschine nach einem der vorhergehenden Ansprüche, **dadurch gekennzeichnet, dass** die Werkzeugaufnahme (15) an einem vorderen, freien Ende der Schiebestange (37) angeordnet ist.

13. Rührmaschine nach einem der vorhergehenden Ansprüche, **dadurch gekennzeichnet, dass** die Schiebeaufnahme (38) einen Bestandteil der Abtriebshalterung (35) und die Schiebestange (37) einen Bestandteil der Werkzeugaufnahme (15) bilden.

14. Rührmaschine nach einem der vorhergehenden Ansprüche, **dadurch gekennzeichnet, dass** die Werkzeugaufnahme (15) ein Schraubgewinde für das Werkzeug (16) aufweist.

## Claims

1. Mixer in the form of a hand-operated power tool (10) for the mixing of building material (34), with a tool holding device (14) with a tool holder (15) extending in a longitudinal direction (30) in front of a housing (12) of the mixer (11) and drivable through a drive motor (18), wherein the hand-operated power tool (10) may be held conveniently at a handle section (21), wherein the tool holding device (14) has an output support (35) rotationally connected to the drive motor (18) for the non-rotatable holding of the tool holder (15) in at least two longitudinal positions relative to the longitudinal direction (30) to change a clearance (31) between a free end (32) of the tool (16) and the housing (12), wherein the tool holder (15) is movable relative to the output support (35) by means of a slide holder (38) and a sliding bar (37) which slides axially in the slide holder (38) in the longitudinal direction (30), **characterised in that** it has at its free end a stirring rod (17) with mixing means (33), for example mixing projections, for mixing the building material (34), that the tool holder (15) is designed to accommodate and hold the stirring rod (17), that the sliding bar (37) is held positively in the slide holder (38) and that the slide holder (38) has an at least partly polygonal inside contour (49) and the sliding bar (37) has an outside contour (48) which fits positively with the inside contour (49), wherein it has a locking device (53) to fix the sliding bar (37) to the slide holder (38) in at least two longitudinal positions and which has a locking element (55) movably mounted on the slide holder (38) at right-angles to the longitudinal direction (30), wherein the sliding bar (37) has, in at least two longitudinal positions on the outside contour (48) which positively matches the inside contour (49), locking locations (56) for the locking element (55), for locking the sliding bar (37) to the slide holder (38).

2. Mixer according to claim 1, **characterised in that** the tool holder (15) is telescopic in the longitudinal direction (30).

3. Mixer according to claim 1 or 2, **characterised in that** the sliding bar (37) is held in the slide holder (38) by frictional locking.

4. Mixer according to any of the preceding claims, **characterised in that** in particular that the inside contour (49) and the outside contour (48) are hexagonal.

5. Mixer according to any of the preceding claims, **characterised in that** the sliding bar (37) is a polygonal bar.

6. Mixer according to any of the preceding claims, **characterised in that** it has a latching device and/or a clamping device for fixing the sliding bar (37) to the slide holder (38). In at least two longitudinal positions.

7. Mixer according to claim 1 or 6, **characterised in that** the locking device (53) and/or the latching device is spring-loaded in a locking position which locks the sliding bar (37) or in a latching position in which the sliding bar (37) is engaged.

8. Mixer according to claim 6 or 7, **characterised in that** the latching device has has a latching element movably mounted on the slide holder (38) at right-angles to the longitudinal direction (30), and that the sliding bar (37) has, in at least two longitudinal positions, latching locations for the latching element, for latching the sliding bar (37) to the slide holder (38).

9. Mixer according to any of the preceding claims, **characterised in that** the locking device (53) has on the slide holder (38) a sliding and/or rotatably mounted locking sleeve (54) to adjust the locking element into a locking position in which it engages in the relevant locking location (56).

10. Mixer according to claim 9, **characterised in that** the locking sleeve (54), mounted in particular in a protective sleeve (69), has a locating space to accommodate the locking element in a release position, in which the locking element is moved out of the respective locking location (56) and the sliding bar (37) may be moved into the slide holder (38).

11. Mixer according to any of the preceding claims, **characterised in that** the sliding bar (37) is removable from the slide holder (38).

12. Mixer according to any of the preceding claims, **characterised in that** the tool holder (15) is located at a front free end of the sliding bar (37).

13. Mixer according to any of the preceding claims, **characterised in that** the slide holder (38) forms a constituent part of the output support (35) and the sliding bar (37) forms a constituent part of the tool holder (15).

14. Mixer according to any of the preceding claims, **characterised in that** the tool holder (15) has a screw thread for the tool (16).

## Revendications

1. Machine de mélange servant de machine-outil à main pour mélanger du matériau de construction (34), avec un dispositif de réception d'outil (14) doté d'un logement d'outil (15) pouvant être entraîné par un moteur d'entraînement (18), dépassant dans un sens longitudinal (30) d'un boîtier (12) de la machine de mélange (11), la machine-outil à main (10) pouvant être saisie aisément sur un ensemble de préhension (21), sachant que le dispositif de réception d'outil (14) présente une fixation réceptrice (35) reliée en rotation au moteur d'entraînement (18) destinée à retenir de manière solidaire en rotation le logement d'outil (15) au moins dans deux positions longitudinales par rapport au sens longitudinal (30) pour la modification d'une distance (31) entre une extrémité libre (32) de l'outil (16) et le boîtier (12), le logement d'outil (15) étant mobile par rapport à la fixation réceptrice (35) à l'aide d'un logement coulissant (38) et d'une barre coulissante (37) mobile dans le sens longitudinal dans le logement coulissant (38) le long de la direction longitudinale (30), **caractérisée en ce qu'**elle présente un mélangeur (17) doté de moyens de mélange (33), par exemple des saillies de mélange, pour mélanger le matériau de construction (34) sur son extrémité libre, **en ce que** le logement d'outil (15) est configuré pour recevoir et retenir le mélangeur (17), et **en ce que** la barre coulissante (37) est reçue par complémentarité de formes dans le logement coulissant (38) et **en ce que** le logement coulissant (38) présentent un contour intérieur (49) au moins en partie polygonal et la barre coulissante (37) présentent un contour extérieur (48) s'adaptant par complémentarité de formes au contour intérieur (49), celle-ci présentant un dispositif de verrouillage (53) pour la fixation de la barre coulissante (37) sur le logement coulissant (38) au moins dans deux positions longitudinales, qui présente un élément de verrouillage (55) logé de manière mobile sur le logement coulissant (38) transversalement à la direction longitudinale (30), la barre coulissante (37) présentant, au moins sur deux positions longitudinales sur le contour extérieur (48) s'adaptant par complémentarité de formes au contour intérieur (49), des logements de verrouillage (56) pour l'élément de verrouillage (55) destiné au verrouillage de la barre coulissante (37) sur le logement coulissant (38).

2. Machine de mélange selon la revendication 1, **caractérisée en ce que** le logement d'outil (15) est télescopique dans la direction longitudinale (30).

3. Machine de mélange selon la revendication 1 ou 2, **caractérisée en ce que** la barre coulissante (37) est reçue en entraînement par friction dans le logement coulissant (38).

4. Machine de mélange selon l'une quelconque des revendications précédentes, **caractérisée en ce que** le contour intérieur (49) et le contour extérieur (48) sont hexagonaux.

5. Machine de mélange selon l'une quelconque des revendications précédentes, **caractérisée en ce que** la barre coulissante (37) est une barre à plusieurs arêtes.

6. Machine de mélange selon l'une quelconque des revendications précédentes, **caractérisée en ce qu'**elle présente un dispositif d'encliquetage et/ou un dispositif de serrage pour la fixation de la barre coulissante (37) sur le logement coulissant (38) dans au moins deux positions longitudinales.

7. Machine de mélange selon la revendication 1 ou 6, **caractérisée en ce que** le dispositif de verrouillage (53) et/ou le dispositif d'encliquetage est sollicité par ressort dans une position de verrouillage verrouillant la barre coulissante (37) ou une position d'encliquetage encliquetant la barre coulissante (37).

8. Machine de mélange selon la revendication 6 ou 7, **caractérisée en ce que** le dispositif d'encliquetage présente un élément d'encliquetage logé de manière mobile transversalement à la direction longitudinale (30) sur le logement coulissant (38) et **en ce que** la barre coulissante (37) présente, sur au moins deux positions longitudinales, des logements de verrouillage pour l'élément d'encliquetage pour l'encliquetage de la barre coulissante (37) sur le logement coulissant (38).

9. Machine de mélange selon l'une quelconque des revendications précédentes, **caractérisée en ce que** le dispositif de verrouillage (53) présente une douille de verrouillage (54) logée de manière mobile en coulissement et/ou en rotation sur le logement coulissant (38) pour le réglage de l'élément de verrouillage dans une position de verrouillage d'engagement dans le logement de verrouillage respectif (56).

10. Machine de mélange selon la revendication 9, **caractérisée en ce que** la douille de verrouillage (54), disposée en particulier dans une enveloppe protectrice (69), présente un espace de réception destiné à recevoir l'élément de verrouillage dans une position de déverrouillage, dans laquelle l'élément de verrouillage est déplacé hors du logement de verrouillage (56) respectif et la barre coulissante (37) est mobile dans le logement coulissant (38).

11. Machine de mélange selon l'une quelconque des revendications précédentes, **caractérisée en ce que** la barre coulissante (37) peut être retirée du logement coulissant (38).

12. Machine de mélange selon l'une quelconque des revendications précédentes, **caractérisée en ce que** le logement d'outil (15) est disposé sur une extrémité avant libre de la barre coulissante (37).

13. Machine de mélange selon l'une quelconque des revendications précédentes, **caractérisée en ce que** le logement coulissant (38) forme une partie de la fixation réceptrice (35) et **en ce que** la barre coulissante (37) forme une partie du logement d'outil (15).

14. Machine de mélange selon l'une quelconque des revendications précédentes, **caractérisée en ce que** le logement d'outil (15) présente un filetage pour l'outil (16).
